# EUROPEAN PATENT APPLICATION

(11) **EP 4 563 624 A1**
(43) Date of publication of application: **04.06.2025**
(21) Application number: 23213670.5
(22) Date of filing: 01.12.2023
(51) Int. Cl.: C08J 5/04, C08J 5/08, C08J 5/24

(54) **RECYCLABLE STYRENE MALEIC ANHYDRIDE AND/OR AT LEAST PARTIALLY IMIDIZED STYRENE MALEIC ANHYDRIDE BASED COMPOSITE MATERIAL BY PREPREG METHOD**

(71) Applicant: Trinseo Europe GmbH, 8808 Pfäffikon (CH)
(72) Inventor: BARAN, Ismet, 8808 Pfäffikon (CH); BOUQUET, Gilbert, 8808 Pfäffikon (CH); VAN DAELE, Ronald, 8808 Pfäffikon (CH)
(74) Representative: Hoffmann Eitle

(57) **Abstract**

The present disclosure relates to a fibre composite material, a method of preparing a fibre composite material, a method of recycling a fibre composite material, a method of processing a fibre composite material, and a use of a fibre composite material. Said fibre composite material comprises
- a styrene-maleic anhydride copolymer (SMA) and/or at least partially imidized SMA copolymer (SMI), and
- continuous fibre material,
wherein the fibre composite material is obtainable by a prepreg technique, comprising
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the continuous fibre composite material.

## Description

### Technical field

The present invention relates to a fibre composite material, a method of preparing a fibre composite material, a method of recycling a fibre composite material, a method of processing a fibre composite material, and a use of a fibre composite material.

### Background art

Fibre-reinforced polymers or plastics typically have a high strength-to-weight ratio compared to the pristine polymer making them useful composites for structural applications. Typically, fibre-reinforced composites are prepared from thermoset polymers which have a high glass transition temperature (Tg) and a high temperature resistance. However, such systems are not recyclable due to the high level of crosslinking in a thermoset polymer. Fibre-reinforced composites based on thermoplastic polymers on the other hand can be recyclable, however, they have a lower thermomechanical stability.

### Problem to be solved

The present invention is therefore directed towards a fibre composite material with a high Tg, high thermomechanical resistance, strong mechanical performance, and which is simultaneously recyclable.

### Summary of the invention

The present invention solves the problems of the prior art by the following means.

In a first aspect, the present invention relates to a fibre composite material comprising
- a styrene-maleic anhydride copolymer (SMA) and/or at least partially imidized SMA copolymer (SMI), and
- continuous fibre material,
wherein the fibre composite material is obtainable by a prepreg technique, comprising
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the fibre composite material.

In a second aspect, the present invention relates to a method for preparing a fibre composite material comprising
- a styrene-maleic anhydride copolymer (SMA) and/or at least partially imidized SMA copolymer (SMI), and
- continuous fibre material,
the method comprising a prepreg technique, comprising the steps of:
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the fibre composite material.

In a third aspect, the present invention relates to a method of recycling the fibre composite material according to the first aspect, the method comprising the steps of
(a) dissolving the fibre composite material in a solvent selected from any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate,
(b) filtering out the continuous fibre material, and
(c) drying the filtrate to recover dissolved SMA and/or SMI.

In a fourth aspect, the present invention relates to a method of processing the fibre composite material according to the first aspect, wherein the processing includes any of stamp forming, thermoforming, compression moulding, vacuum assisted moulding, press consolidation, automated fibre and tape placement, automated fibre and tape winding, autoclave consolidation, and 3D printing.

In fifth aspect, the present invention relates to a use of the fibre composite material according to the first aspect in an article, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

### Brief description of the drawings

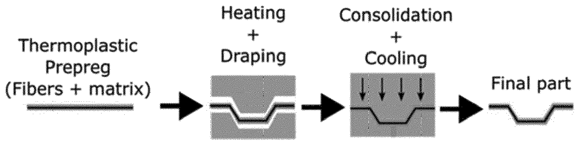

Figure 1 depicts a schematic for processing a fibre composite material according to one embodiment of the present invention.

### Detailed description of the invention

### Fibre composite material

In a first aspect, the present invention relates to a fibre composite material comprising
- a styrene-maleic anhydride copolymer (SMA) and/or at least partially imidized SMA copolymer (SMI), and
- continuous fibre material,
wherein the fibre composite material is obtainable by a prepreg technique, comprising
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the fibre composite material.

The term "copolymer" as used herein has its customary meaning as used in the art. The following description is merely for illustrative purposes. Copolymer chains comprise units of at least two comonomers. The term "monomer" as used herein describes a molecule of a first type that is able to undergo polymerisation with other molecules. Said other molecules may be other molecules of the first type, molecules of a second type and optionally further types, or molecules of the first, second and optionally further types. Having undergone polymerization and being incorporated into the polymer chain, the term "unit of monomer" refers to the chemical unit in the polymer which corresponds to the previous monomer. The units of monomers may also be described as "repeating units".

If molecules of the first type only undergo polymerization with other molecules of the first type, then only one monomer is present, which may also be referred to as a homomonomer. Homomonomers polymerise to form homopolymers consisting of units of homomonomers. The broader term "monomer" includes homomonomers. For instance, a monomer being a molecule "A" may polymerise to form a polymer " [...] -A-A-A-A- [...] ", which in turn consists of units of monomers "-A-". For instance, ethylene molecules (=monomers) may polymerise to form polyethylene (=polymer), which in turn consists of ethylene units (=units of monomer).

If the molecules of the first type undergo polymerisation with molecules of the second type and optionally further types, then the molecules of the first, second and optionally further types are comonomers respectively. Comonomers polymerise to form copolymers consisting of units of comonomers. The broader term "monomer" includes comonomers. For instance, a comonomer being a molecule "A" may polymerise with a comonomer being a molecule "B" to form a copolymer "[...]-A-B-A-A-[...] ", which in turn consists of units of comonomers "-A-" and "-B-".

If the molecules of the first type (comonomers "A") only polymerise with molecules of the second type (comonomers "B") and optionally other molecules "A", then two comonomers are present and a binary copolymer is formed. If the molecules of the first type (comonomers "A") polymerise with molecules of a second type (comonomers "B") and molecules of a further type (comonomers "C") and optionally other molecules "A", then three comonomers are present and a ternary copolymer (=terpolymer) is formed.

The term "copolymer" includes any type of sequence of units of comonomers in the polymer chains, such as random copolymers with a random sequence (e.g. "[...]-A-B-A-A-A-B-[...]"), block copolymers with blocks of identical sequences (e.g. "[...]-A-A-A-[...]-B-B-B-[...]"), and repeating copolymers with a repeating/alternating sequence (e.g. "[...]-A-B-A-B-[...]") .

In accordance with the above definitions, styrene-maleic anhydride (SMA) is a binary copolymer formed from comonomers styrene and maleic anhydride respectively, and comprising units of styrene and maleic anhydride comonomers, respectively.

The term "at least partially imidized SMA copolymer" (SMI) describes a copolymer based on SMA, wherein at least a portion of the units of maleic anhydride comonomers are imidized to be units of maleic imide comonomers, wherein the imidic N-atom may have an H attached to it or be further functionalised with a phenyl group or other organic group. As such, the term includes pure SMI copolymer which is a binary copolymer comprising units of styrene and maleic imide comonomers respectively, as well as ternary copolymers comprising units of styrene, maleic imide, and maleic anhydride comonomers respectively. For instance, in embodiments the ratio of units of maleic imide comonomers to units of maleic anhydride monomers may be from 1:99 to 100:0. In some embodiments, the ratio of units of maleic imide comonomers to units of maleic anhydride monomers may be from 5:95 to 20:80, from 20:80 to 35:65, 50:50, from 65:35 to 80:20, from 80:20 to 95:5, and/or any permutation thereof.

The term "fibre material" as used herein, refers to a material substantially consisting of fibres, preferably consisting of fibres. A fibre is a material form characterised by a length and a diameter, wherein said form has a very high aspect ratio of length to diameter. Typically, fibres are flexible along their length dimension but substantially less flexible, preferably inflexible, around their diameter. The term "fibre" may be used synonymously with the term "filament".

The term "continuous" as used herein, characterises a fibre with a very high length-to-diameter aspect ratio. In one embodiment, the aspect ratio is at least 10,000, preferably at least 25,000, more preferably at least 50,000, and even more preferably at least 100,000. In one embodiment, the diameter of a continuous fibre in the continuous fibre material is between 1-200 µm. Preferably, the length of a continuous fibre in the continuous fibre material is at least 10 mm. The term "continuous fibre material" may be used synonymously herein with the term "fibre material".

The fibre composite material according to the present invention is thus obtainable by a prepreg technique, comprising
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the fibre composite material.

Without wishing to be bound by theory, the present inventors submit that through said prepreg technique a favourable adhesion between the SMA and/or SMI, and the fibre material can be achieved, resulting in a fibre composite material with high thermomechanical resistance which is simultaneously recyclable. Through said prepreg techniques, fibres composite materials with continuous fibres can be prepared, whereas traditional methods such as melt-extrusion are not suitable due to the more challenging processability of continuous fibres. SMA and/or SMI materials and fibre-reinforced composites materials thereof have an improved rigidity, heat resistance, and dimensional stability compared to fibre-reinforced crystalline materials such as polypropylene. These qualities afford SMA and/or SMI fibre composite materials better warpage, high fluidity and aging resistance. Moreover, said prepreg technique achieves a favourable and consistent mixing between the SMA and/or SMI and the fibre material which affords the material a strong thermomechanical and mechanical performance. The favourable mixing may be achieved through controlling the viscosity of the dissolved SMA and/or dissolved SMI, said viscosity leading to a good impregnation of the continuous fibre material in step (II), with the dissolved SMA and/or SMI moving into the inter-fibre space.

Moreover, the use of continuous fibre material as opposed to shorter/chopped fibre leads to strong mechanical properties of the fibre composite material making it suitable for load-bearing structural applications.

Moreover, the obtained fibre composite material is recyclable by re-dissolving the fibre composite material in the prepreg solvent, filtering out the fibre material and drying the filtrate to recover both the SMA and/or SMI and the fibre material.

In a preferred embodiment according to the first aspect of the present invention, consolidating the fibre composite material comprises a further manufacturing processing step, selected from any of stamp forming, thermoforming, compression moulding, vacuum assisted moulding, press consolidation, automated fibre and tape placement, automated fibre and tape winding, autoclave consolidation, 3D printing, and/or layering to form a laminate.

Through such a further manufacturing processing step, the fibre composite material can be further strengthened, e.g. by further improving the adhesion between the SMA and/or SMI and the fibre material. Moreover, through such a further manufacturing processing step, the fibre composite material can be arbitrarily shaped and/or moulded into a fibre composite article.

Preferably, the length of a continuous fibre in the continuous fibre material is at least 20 mm, more preferably at least 30 mm, and even more preferably at least 40 mm. In a particularly preferred embodiment, the length of a continuous fibre in the continuous fibre material is 40-60 mm.

The viscosity of the dissolved SMA and/or SMI may be controlled by adjusting the amount of prepreg solvent to SMA and/or SMA. Preferably, the viscosity is at most 10,000 mPa.s, more preferably at most 9,000 mPa.s, more preferably at most 8,000 mPa.s, more preferably at most 7,000 mPa.s, more preferably at most 6,000 mPa.s, more preferably at most 5,000 mPa.s, more preferably at most 4,000 mPa.s, more preferably at most 3,000 mPa.s, more preferably at most 2,000 mPa.s, more preferably at most 1,000 mPa.s, more preferably at most 800 mPa.s, more preferably at most 600 mPa.s, more preferably at most 400 mPa.s, and even more preferably at most 200 mPa.s. The viscosity may be measured by a rotational viscosimeter at 100 rpm.

In a preferred embodiment according the first aspect of the present invention, the fibre material is any of glass fibre material, carbon fibre material, aramid fibre material, basalt fibre material, and/or natural fibre material in the form fabrics, such as non-woven, woven, unidirectional, continuous filament mat, chopped strand mat, and direct rovings.

Preferably the fibre material is a glass fibre material, and more preferably a continuous glass fibre material. Preferably in said glass fibre material, the length of a continuous fibre in the continuous fibre material is at least 20 mm, more preferably at least 30 mm, and even more preferably at least 40 mm. In a particularly preferred embodiment, in said glass fibre material the length of a continuous fibre in the continuous fibre material is 40-60 mm.

The SMA and/or SMI prepreg composites with glass fibres in the above-disclosed length have particularly strong mechanical properties which are suitable for load-bearing structures.

In a preferred embodiment according to the first aspect of the present invention, the fibre composite material comprises at least 20 wt% fibre material relative to the total weight of the composite, preferably at least 40 wt%, and even more preferably at least 55 wt%; and at most 99 wt% fibre material relative to the total weight of the composite, preferably at most 90 wt%, and even more preferably at most 80 wt%.

Preferably, the fibre composite material substantially consists of the SMA and/or SMI, and the fibre material. In a preferred embodiment, the SMA and/or SMI and the fibre material comprise at least 60 wt% relative to the total weight of the composite, preferably at least 70 wt%, more preferably at least 80 wt%, and even more preferably at least 90 wt%.

Without wishing to be bound by theory, the present inventors submit that within the above-described content ranges of fibre material, and SMA and/or SMI and fibre material respectively, relative to the total mass of the composite, the thermomechanical and mechanical properties of the fibre composite material are particularly favourable due to the favourable ratio of binding SMA and/or SMI and strengthening fibre material.

In a preferred embodiment, according to the first aspect of the present invention, the fibre composite material is recyclable, optionally wherein at least 60 wt% of the material are recoverable according to the method for recycling disclosed below, preferably at least 70 wt%, more preferably at least 80 wt%, more preferably at least 90 wt%, and even more preferably at least 95 wt.

Herein, the recoverable material includes the fibre material, the SMA and/or SMI, and optionally the filler.

The preferred method for recycling the fibre composite material is further described in the third aspect of the present invention.

In preferred embodiment according to the first aspect of the present invention, the SMA and/or SMI has a weight average molecular weight of at least 5,000 g/mol.

The weight average molecular weight may be measured using gel permeation chromatography (GPC) using narrow molecular weight polystyrene standards, preferably having a dispersity of less than 1.1, THF as a solvent and a UV or diode array detector with a typical detection wavelength of 254 nm.

Preferably, the weight average molecular weight of the SMA and/or SMI is at least 10,000 g/mol, more preferably at least 20,000 g/mol, more preferably 30,000 g/mol, more preferably at least 40,000 g/mol, more preferably 50,000 g/mol, more preferably at least 60,000 g/mol, more preferably 70,000 g/mol, more preferably at least 80,000 g/mol, more preferably 90,000 g/mol, and even more preferably at least 100,000 g/mol.

In a preferred embodiment according to the first aspect of the present invention, the SMA and/or SMI has a maleic anhydride and/or maleic imide content of at least 5 wt% based on the total weight of the SMA and/or SMI.

Preferably, the maleic anhydride and/or maleic imide content is at least 10 wt%, more preferably at least 15 wt %, and even more preferably at least 20 wt%. In a particularly preferred embodiment, the maleic anhydride and/or maleic imide content is 23 wt%.

When the SMA and/or SMI has a maleic anhydride and/or maleic imide content of at least 5 wt%, the Tg of the fibre composite material can be kept especially high thereby ensuring an especially high thermomechanical resistance. Particularly high Tg can be achieved when the maleic anhydride and/or maleic imide content is 23 wt%. Moreover, it is submitted that when the maleic anhydride and/or maleic imide content of the dissolved SMA and/or SMI is at least 5 wt%, the adhesion between the fibres and the polymer is particularly strong. Glass transition temperatures may be determined using differential scanning calorimetry (DSC) with a heating and cooling rate of 20 °C/min.

Preferably, the fibre composite material has a flexural strength (FS)of at least 200 MPa, more preferably at least 300 MPa, and even more preferably at least 400 MPa. The flexural strength is measured according to ISO 14125.

Preferably, the fibre composite material has a flexural modulus of at least 15 GPa, more preferably at least 16 GPa, more preferably at least 17 GPa, more preferably at least 18 GPa, more preferably at least 19 GPa, more preferably at least 20 GPa, more preferably at least 21 GPa, more preferably at least 22 GPa, more preferably at least 23 GPa, more preferably at least 24 GPa, more preferably at least 25 GPa, and even more preferably at least 26 GPa. The flexural modulus is measured according to ISO 14125.

Preferably, the fibre composite material has flexural strain at failure of at least 2%, more preferably at least 2.5%, and even more preferably at least 3%. The flexural strain at failure is measured according to ISO 14125.

In a preferred embodiment according to the first aspect of the present invention, the continuous fibre material is pre-treated by any of a plasma treating step, an etching step, an air abrasion step, and a sizing step, such as a silane coating step for glass fibres.

The term "pre-treated" as used herein means that the fibre has been treated prior to impregnation with the dissolved SMA and/or dissolved SMI. The above pre-treatment steps may further improve the adhesion between the fibre material and the SMA and/or SMI. In one embodiment, the pre-treatment includes a sizing step using silane, in which a thin homogenous silane layer is applied on the surface of the glass fibres.

In a preferred embodiment according to the first aspect of the present invention, the fibre composite material further comprises an additive selected from any of a flame retardant additive, a UV stabiliser, a filler, an antioxidant, a mould release agent, a pigment, or any combination thereof.

Preferably, said additive is contained in amount of at most 40 wt% relative to the total weight of the fibre composite material, preferably at most 30 wt%, more preferably at most 20 wt%, and even more preferably at most 10 wt%. A preferred flame retardant additive is aluminium trihydrate (ATH).

### Method for preparing fibre composite material

In a second aspect, the present invention relates to a method for preparing a fibre composite material comprising
- a styrene-maleic anhydride copolymer (SMA) and/or at least partially imidized SMA copolymer (SMI), and
- continuous fibre material,
the method comprising a prepreg technique, comprising the steps of:
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the fibre composite material.

The definitions of terms from the first aspect apply *mutatis mutandis* to the second aspect. The steps of the second aspect are preferably the steps of the first aspect.

In a preferred embodiment, the prepreg solvent is a non-toxic and low boiling point solvent. Preferably, solvents from renewable resources may be used such as limonene, methyl THF, dimethyl carbonate.

In a preferred embodiment of the second aspect of the present invention, the solvent is any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate.

In one embodiment, consolidating the fibre composite material as in step (III) herein comprises a further manufacturing processing step, selected from any of stamp forming, thermoforming, compression moulding, vacuum assisted moulding, press consolidation, automated fibre and tape placement, automated fibre and tape winding, autoclave consolidation, 3D printing, and/or layering to form a laminate.

### Method of recycling the fibre composite material

In a third aspect, the present invention relates to a method of recycling the fibre composite material according to the first aspect, the method comprising the steps of
(a) dissolving the fibre composite material in a solvent selected from any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate, or combinations thereof,
(b) filtering out the continuous fibre material, and
(c) drying the filtrate to recover dissolved SMA and/or SMI.

The definitions of terms from the first aspect apply *mutatis mutandis* to the third aspect.

Dissolving the fibre composite material may further be effected through any of heating, mixing, ultrasonic cavitation, or the addition of further solvation aids, such as detergents.

Through the method of recycling outlined above, both the continuous fibre material and the SMA and/or SMI can be recovered. Preferably, at least 60 wt% of the material are recoverable, more preferably at least 70 wt%, more preferably at least 80 wt%, more preferably at least 90 wt%, and even more preferably at least 95 wt%.

Recovered continuous fibre material may be re-used in a similar process, such as making new fibre composite materials. Similarly, recovered SMA and/or SMI may be re-used.

### Method of processing the fibre composite material

In a fourth aspect, the present invention relates to a method of processing the fibre composite material according to the first aspect, wherein the processing includes any of stamp forming, thermoforming, compression moulding, vacuum assisted moulding, press consolidation, automated fibre and tape placement, automated fibre and tape winding, autoclave consolidation, and 3D printing.

The definitions of terms from the first aspect apply *mutatis mutandis* to the fourth aspect.

The present disclosure also relates to an objection obtainable by said method.

### Use of the fibre composite material

In fifth aspect, the present invention relates to a use of the fibre composite material according to the first aspect in an article, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

The definitions of terms from the first aspect apply *mutatis mutandis* to the fifth aspect.

The present disclosure also relates to an article comprising the fibre composite material according to the first aspect, preferably said article being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

Based on the foregoing discussion, the following examples, and without wishing to be bound by theory, the inventors have provided a recyclable fibre composite material with a high temperature resistance.

### Examples

The present invention is exemplified by the following, non-limiting examples.

The following methods of characterisation were used throughout the examples: The flexural strength, flexural modulus and flexural strain at failure were determined according to ISO 14125. The total glass fibre content in the composite was determined using thermogravimetric analysis as the residual mass at 800 °C.

### Example A

150 g of SMA (15% MA content) is dissolved in 850 g of acetone solvent. Unidirectional glass fibre fabrics (Metys L600E10C-0 600 gsm) with 15 meters length were impregnated by the solution by wetting the fiber through a bath of SMA in solvent at a consistent speed. Subsequently, the solvent was allowed to evaporate after which a unidirectional glass fibre reinforced SMA prepreg was obtained. The glass fibre volume fraction was approximately 50%. The nominal size of the prepreg was 30 x 30 cm.

A total of 4 layers of said prepregs were laminated manually. Subsequently, the 4 layers of prepreg were consolidated in a heated press with a pressure of 1-10 MPa. The temperature of the press increased from 20°C to 260 °C with a heating ramp of 20 °C/min. The temperature kept constant at 260 °C for a 30 min. After cooling with a rate of 20 °C/min, the pressure of the press was released and fully consolidated prepregs, i.e. the composite plate, was removed. The nominal thickness of the fully consolidated plate was 2 mm. Optionally, a thermoforming step can be applied to give a specific shape or geometry to the composite plate.

| Example | Ash content (wt%) | Flexural strength (MPa) | Flexural Modulus (GPa) | Flexural failure strain (%) |
|---|---|---|---|---|
| A. 1 | 77 | 403 | 27 | 1.68 |
| A.2 (comparative) | | 512 | 27 | |

Comparative Example A.2 is based on a commercially available polypropylene/glass composite with a glass volume fraction of 35%.

### Example B

The viscosity values for various concentrations of dissolved SMA in acetone are tabulated below.

**Table B2**

| SMA 23% MA content, MW = 115,000 | Viscosity (mPa.s) | SMA 25 wt% MA, Mw =5,000 g/mol | Viscosity (mPa.s) |
|---|---|---|---|
| 10 wt% | 10 | | |
| 20 wt% | 25 | 20 wt% | 22 |
| 30 wt% | 60 | 30 wt% | 220 |
| 40 wt% | 330 | 40 wt% | 1590 |

## Claims

1. A fibre composite material comprising
- a styrene-maleic anhydride copolymer (SMA) and/or at least partially imidized SMA copolymer (SMI), and
- continuous fibre material,
wherein the fibre composite material is obtainable by a prepreg technique, comprising
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the continuous fibre composite material.

2. The fibre composite material according to claim 1, wherein consolidating the fibre composite material comprises a further manufacturing processing step, selected from any of stamp forming, thermoforming, compression moulding, vacuum assisted moulding, press consolidation, automated fibre and tape placement, automated fibre and tape winding, autoclave consolidation, 3D printing, and/or layering to form a laminate.

3. The fibre composite material according to any of claims 1 or 2, wherein the continuous fibre material is any of glass fibre material, carbon fibre material, aramid fibre material, basalt fibre material, and/or natural fibre material in the form fabrics, such as non-woven, woven, unidirectional, continuous filament mat, chopped strand mat, and direct rovings.

4. The fibre composite material according to any of claims 1-3, wherein the fibre composite material comprisesat least 20 wt% continuous fibre material relative to the total weight of the composite, preferably at least 40 wt%, and even more preferably at least 55 wt%; and at most 99 wt% continuous fibre material relative to the total weight of the composite, preferably at most 90 wt%, and even more preferably at most 80 wt%.

5. The fibre composite material according to any of claims 1-4, wherein the fibre composite material is recyclable, optionally wherein at least 80 wt% of the material are recoverable according to the method for recycling disclosed in the description, preferably at least 85 wt%, more preferably at least 90 wt%, more preferably at least 95 wt%, and even more preferably at least 99 wt.

6. The fibre composite material according to any of claims 1-5, wherein the SMA and/or SMI has
• a weight average molecular weight of at least 5,000 g/mol, wherein the weight average molecular weight is determined as described in the description; and/or
• a maleic anhydride and/or maleic imide content of at least 5 wt% based on the total weight of the SMA and/or SMI.

7. The fibre composite material according to any of claims 1-5, wherein the continuous fibre material is pre-treated by any of a plasma treating step, an etching step, an air abrasion step, and a sizing step, such as a silane coating step for glass fibres.

8. The fibre composite material according to any of claims 1-6, wherein the fibre composite material further comprises an additive selected from any of a flame retardant additive, a UV stabiliser, a filler, an antioxidant, a mould release agent, a pigment, or any combination thereof.

9. A method for preparing a fibre composite material comprising
- a styrene-maleic anhydride copolymer (SMA) and/or at least partially imidized SMA copolymer (SMI), and
- continuous fibre material,
the method comprising a prepreg technique, comprising the steps of:
(I) dissolving SMA and/or SMI in a prepreg solvent to obtain dissolved SMA and/or dissolved SMI,
(II) impregnating the continuous fibre material with the dissolved SMA and/or the dissolved SMI, and
(III) evaporating the prepreg solvent and consolidating the continuous fibre composite material.

10. The method according to claim 9, wherein the prepreg solvent is any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate.

11. A method of recycling the fibre composite material of any of claims 1-8, the method comprising the steps of
(a) dissolving the fibre composite material in a solvent selected from any of acetone, methyl ethyl ketone, tetrahydrofuran, cyclohexanone, diethyl ether, dimethylformamide (DMF), dimethylsulfoxide (DMSO), N-methyl pyrrolidone (NMP), dichloromethane (DCM), chloroform, toluene, ethyl benzene, ethyl acetate, or any combination thereof,
(b) filtering out the continuous fibre material and
(c) drying the filtrate to recover dissolved SMA and/or SMI.

12. A method of processing the fibre composite material according to any of claims 1-8, wherein the processing includes any of stamp forming, thermoforming, compression moulding, vacuum assisted moulding, press consolidation, automated fibre and tape placement, automated fibre and tape winding, autoclave consolidation, and 3D printing.

13. Object obtainable by the method of claim 12.

14. Use of the fibre composite material according to any of claims 1-8 in an article, said article preferably being any of electronics equipment, aerospace materials, wind turbines, casings, marine structures, pipe and tank, construction structures, transportation, defence materials, consumer goods, circuit boards, battery casings, pressurized tanks, and/or structural profiles used in construction industry.

15. An article comprising the fibre composite material according to any of claims 1-8, preferably said object being electronic equipment aerospace materials, wind turbines, casings, marine structures, pipe and tank, construction structures, transportation, defence materials, consumer goods, circuit boards, battery casings, pressurized tanks, and/or structural profiles used in construction industry.
